# EUROPÄISCHE PATENTSCHRIFT

(11) **EP 2 795 096 B1**
(45) Veröffentlichungstag und Bekanntmachung des Hinweises auf die Patenterteilung: **06.09.2017**
(21) Anmeldenummer: 12794898.2
(22) Anmeldetag: 15.11.2012
(51) Int. Cl.: F02M 59/36, F16K 31/06

(54) **MENGENSTEUERVENTIL, UND HOCHDRUCKPUMPE MIT MENGENSTEUERVENTIL**
QUANTITY CONTROL VALVE AND HIGH-PRESSURE PUMP WITH QUANTITY CONTROL VALVE
SOUPAPE DE COMMANDE DE QUANTITÉ ET POMPE À HAUTE PRESSION POURVUE D'UNE SOUPAPE DE COMMANDE DE QUANTITÉ

(30) Priorität: 20.12.2011 DE 102011089288
(43) Veröffentlichungstag der Anmeldung: 29.10.2014
(73) Patentinhaber: Robert Bosch GmbH, 70442 Stuttgart (DE)
(72) Erfinder: WILMS, Rainer, 71706 Markgroeningen (DE); MAESS, Matthias, 71034 Boeblingen (DE); BRUNNER, Dominik, 70563 Stuttgart (DE)
(86) Internationale Anmeldenummer: PCT/EP2012/072673
(87) Internationale Veröffentlichungsnummer: WO 2013/092019

(56) Entgegenhaltungen:
- EP-A1- 1 348 864
- WO-A1-2011/079989
- DE-A1- 19 834 120
- DE-A1-102009 046 082

## Beschreibung

### Stand der Technik

Die Erfindung betrifft ein Mengensteuerventil nach dem Oberbegriff des Anspruchs 1 und eine Hochdruckpumpe mit Mengensteuerventil nach dem nebengeordneten Anspruch 10.

Mengensteuerventile, insbesondere zur Zumessung eines Fluides, für eine stromabwärts angeordnete Hochdruckpumpe sind bekannt. Beispielsweise werden sie in Common-Rail-Kraftstoffsystemen von Kraftfahrzeugen als Mengensteuerventil eingesetzt, um den von einer Hochdruckförderpumpe in das Common-Rail geförderten Kraftstoffstrom zu steuern. Solche Mengensteuerventile können elektromagnetisch betätigt werden. Sie umfassen einen Nadel-Anker-Verbund. Ein Elektromagnet, der Teil des Nadel-Anker-Verbunds ist, und eine Feder wirken auf ein Ventilelement des Mengensteuerventils ein. Das Aufprallen eines Nadel-Anker-Verbundes in den Endpositionen der Offen- bzw. Schließstellung des Mengensteuerventils führt, besonders bei niedrigen Drehzahlen, zu einer Schwingungsanregung, die sich akustisch und mechanisch nachteilig bemerkbar macht.

Aus der DE 10 2009 046 079 A1 ist ein Mengensteuerventil bekannt, das über eine Dämpfungseinrichtung verfügt, die einen Fluidbehälter umfasst, der von einem beweglichen Kolben begrenzt wird. Der Kolben ist so angeordnet, dass er von dem Ventilelement kurz vor dem Aufprall am Anschlag beaufschlagt wird und so Fluid aus dem Fluidbehälter durch eine Drosselstelle hindurch drückt.

In der WO 2011 067026 A1 ist ein Mengensteuerventil beschrieben, welches eine hydraulisch wirksame Abschirmung aufweist, die eine Rückströmung von einem Ventilelement mindestens teilweise fernhält. Die Abschirmung ist ein topfförmiges Bauteil, das fest mit einem Ventilgehäuse verbunden ist. Die Abschirmung ist in Bezug auf das Ventilelement so angeordnet, dass eine axiale Stirnfläche des Ventilelements durch das topfförmige Bauteil überdeckt wird.

Ein weiteres Mengensteuerventil ist aus der EP 1 348 864 A1 bekannt.

### Offenbarung der Erfindung

Das der Erfindung zugrunde liegende Problem wird durch ein Mengensteuerventil nach Anspruch 1 gelöst. Vorteilhafte Weiterbildungen sind in Unteransprüchen angegeben. Für die Erfindung wichtige Merkmale finden sich ferner in der nachfolgenden Beschreibung und in den Zeichnungen, wobei die Merkmale sowohl in Alleinstellung als auch in unterschiedlichen Kombinationen für die Erfindung wichtig sein können, ohne dass hierauf nochmals explizit hingewiesen wird.

Ein Grundgedanke der Erfindung ist es, durch Verwendung des Ventilelements als Tauchkörper in Kombination mit einem topfartigen Dämpfungsraum eine Dämpfungseinrichtung für ein Mengensteuerventil zu schaffen, welche mindestens eine hydraulische Drosselstelle aufweist. Diese Drosselstellen können so gestaltet werden, dass sich die Dämpfungswirkung in Abhängigkeit der Position des Ventilelements relativ zu dem Dämpfungsraum ändert. Dadurch kann der Geschwindigkeitsverlauf des Ventilelements an verschiedene Anwendungen angepasst werden. Besonders vorteilhaft ist dabei, dass die Erfindung direkt in das Mengensteuerventil ohne zusätzliche Bauteile integriert wird. Somit verursacht die Erfindung keine zusätzlichen Kosten.

Außerdem ist die erfindungsgemäße Dämpfungseinrichtung unempfindlich gegenüber Streuungen der Bauteilabmessungen, die bei jeder Serienfertigung unvermeidbar sind.

Das erfindungsgemäße Mengensteuerventil hat den Vorteil, dass durch Reduzierung einer Aufprallgeschwindigkeit eines Ventilelements an einem Anschlag die Anregung von Geräuschen reduziert und außerdem die Robustheit des Mengensteuerventils erhöht wird. Die reduzierte Aufprallgeschwindigkeit vermindert auch die Gefahr eines Zurückprallens des Ventilelements vom Anschlag gegen den Nadel-Anker-Verbund. Die reduzierte mechanische Beanspruchung erlaubt folglich eine Reduzierung der bewegten Massen, das heißt die Nadel kann leichter gebaut werden und damit kann auch der Magnetkreis schwächer ausgelegt werden. Somit führt die Erfindung auch zu einer Reduzierung der elektrischen Verlustleistung des elektromagnetisch betätigten Mengensteuerventils.

Die erfindungsgemäße Dämpfungseinrichtung des Mengensteuerventils funktioniert grundsätzlich wie folgt: Bei einer Öffnungsbewegung trifft der Nadel-Anker-Verbund eines Aktuators auf ein plattenförmiges Ventilelement und hebt dieses entgegen einer Federkraft aus einem Ruhesitz. Das Ventilelement seinerseits wirkt auf das in dem Dämpfungsraum vorhandene Fluid. Das Fluid wird dabei unter Druck gesetzt und entweicht aus dem Dämpfungsraum durch einen zwischen Ventilelement und einer Wand des Dämpfungsraums ausgebildeten Spalt. Durch die Drosselwirkung des Spalts kann das Fluid nur langsam aus dem Fluidbehälter entweichen und das Ventilelement wird wirkungsvoll verzögert. Dadurch ist die Aufprallgeschwindigkeit des Ventilelements an einem Anschlag reduziert und die Geräuschentwicklung nimmt ab.

Weil der schmale Spalt, der zwischen dem plattenförmigen Ventilelement und einer Wand des Dämpfungsraums ausgebildet ist, verhältnismäßig stark von den Fertigungstoleranzen des Ventilelements und der Wand abhängig ist, wird er erfindungsgemäß mit mindestens einer, bevorzugt aber mehreren (zum Beispiel drei) Ausbuchtungen von definierter Größe (Querschnitt und Tiefe) versehen. Diese Ausbuchtungen erweitern den Spalt bereichsweise. Der Spalt ist als Schiebesitz zwischen dem plattenförmigen Ventilelement und der Wand ausgebildet und dient vor allem der Führung des Ventilelements.

Der wirksame Strömungsquerschnitt, gebildet vor allem aus den senkrecht zur Strömungsrichtung des Fluides angeordneten Querschnittsflächen der Ausbuchtungen, ist sehr viel größer als der Strömungsquerschnitt des Spaltes. Daher beeinflussen die unvermeidbaren Fertigungstoleranzen von Dämpfungsraum und Ventilelement nur noch die Führung des Ventilelements; nicht aber das Dämpfungsverhalten des Mengensteuerventils. Der wirksame Strömungsquerschnitt hängt bei dem erfindungsgemäßen Mengensteuerventil vor allem von den Querschnittsflächen der Ausbuchtungen ab. In Folge dessen kann die gewünschte Drosselwirkung durch die Abmessungen und Form der Ausbuchtungen und nicht durch die Weite des Spalts zwischen Wand und Ventilelement bestimmt werden. Die Fertigungstoleranzen der Ausbuchtungen wirken sich dabei nur in geringem Maße auf die Drosselwirkung aus, so dass die Streuung des Dämpfungsverhaltens verschiedener Exemplare eines in Serie gefertigten Mengensteuerventils gering ist.

Dieser Effekt lässt sich vor allem dann erreichen, wenn der Anteil der Ausbuchtungen am Umfang des Spalts weniger als 50%, bevorzugt weniger als 30% beträgt.

Eine fertigungstechnisch einfache Lösung sieht vor, dass sich die mindestens eine Ausbuchtung orthogonal zu einer Längsachse des Mengensteuerventils radial nach außen in der Wand des Dämpfungsraums oder radial nach innen in dem Ventilelement erstreckt. Der Dämpfungsraum kann als Blechumformteil oder aus Kunststoff hergestellt werden. In letzterem Fall kann er integraler Bestandteil eines Gehäuses des Mengensteuerventils sein.

Um das Dämpfungsverhalten des Ventilelements bestmöglich an die Einsatzbedingungen anpassen zu können, ist vorgesehen, den freien Strömungsquerschnitt des Spalts in Abhängigkeit der Stellung des Ventilelements relativ zu dem Dämpfungsraum zu ändern.

Eine erfindungsgemäße Ausgestaltung sieht vor, dass eine Tiefe T der Ausbuchtung kleiner ist als die Tiefe des Spalts. Die Tiefe des Spalts wird durch einen ersten Vorsprung, an dem das Ventilelement in seiner Offenstellung anschlägt, begrenzt.

Wenn die Tiefe der Ausbuchtungen kleiner ist als der oben genannte Spalt, überdeckt das Ventilelement auf seinem Weg in Richtung Offenstellung die Ausbuchtung komplett und dem entweichenden Fluid steht nur noch der wirksame Strömungsquerschnitt, der durch den Spalt gebildet wird, offen. Dadurch wird die Drosselwirkung verstärkt und die Geschwindigkeit des Ventilelements nochmals reduziert. Dadurch wird ein Öffnen des Mengensteuerventils in zwei Stufen realisiert. In der ersten Stufe steht ein relativ großer wirksamer Strömungsquerschnitt zur Verfügung, der aus radialem Spalt und Ausbuchtung gebildet wird. Somit kann Fluid schnell und mit geringer Dämpfung aus dem Dämpfungsraum entweichen und das Ventilelement bewegt sich schnell in die Offenstellung. Die zweite Stufe wird aktiviert, wenn eine Kante des Ventilelements einen zweiten Vorsprung überragt und damit die Ausbuchtung vollständig überdeckt wird. Der wirksame Strömungsquerschnitt ist dann gegenüber der ersten Stufe kleiner. Dadurch entweicht das Fluid langsamer aus dem Dämpfungsraum. Dadurch wird das Ventilelement noch weiter verzögert und schlägt mit weiter reduzierter Geschwindigkeit am ersten Vorsprung an. Somit kann vorteilhaft eine kurze Öffnungszeit des Mengensteuerventils mit einer sehr geringen Geräuschentwicklung kombiniert werden.

Eine weitere erfindungsgemäße Ausgestaltung sieht vor, dass sich die Ausbuchtung von einer (Vorder-)Kante zu einer Engstelle hin verjüngt. Damit wird erreicht, dass das der wirksame Strömungsquerschnitt in Richtung Anschlag, das heißt in Richtung ersten Vorsprung stetig abnimmt. Damit wird eine stetige zunehmende Drosselwirkung erzielt, je näher das Ventilelement seinem Anschlag kommt. Es ergeben sich daraus die gleichen Vorteile wie bereits voranstehend erläutert.

Nachfolgend werden beispielhafte Ausführungsformen der Erfindung unter Bezugnahme auf die Zeichnung erläutert. In der Zeichnung zeigen:
- Figur 1: eine Übersichtsdarstellung eines Kraftstoffsystems mit einer Hochdruckpumpe, einem Common-Rail-System und einem Mengensteuerventil;
- Figur 2: ein Mengensteuerventil in einer Schnittdarstellung;
- Figur 3: ein Ventilelement und ein Innenteil in einer ersten Ausführungsform
- Figur 3A: eine Detailansicht des Ventilelements und des Innenteils in einer zweiten Ausführungsform
- Figur 4: eine Detailansicht des Ventilelements und des Innenteils in einer dritten Ausführungsform
- Figur 5: eine Detailansicht des Ventilelements und des Innenteils in einer vierten Ausführungsform.

Es werden für funktionsäquivalente Elemente und Größen in allen Figuren auch bei unterschiedlichen Ausführungsformen die gleichen Bezugszeichen verwendet.

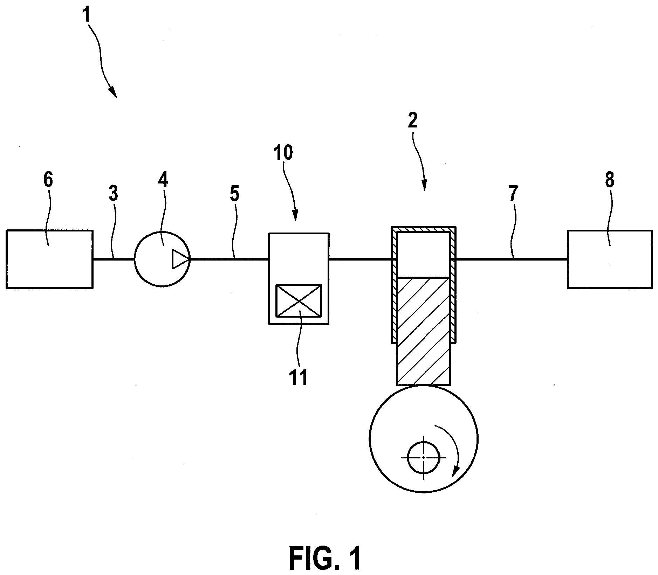

Figur 1 zeigt ein Kraftstoffsystem 1 einer Brennkraftmaschine in einer stark vereinfachten Darstellung. Eine nicht näher erläuterte als Kolbenpumpe ausgebildete Hochdruckpumpe 2 ist stromaufwärts über eine Saugleitung 3, eine Vorförderpumpe 4 und eine Niederdruckleitung 5 mit einem Kraftstofftank 6 verbunden. Stromabwärts ist ein Hochdruckspeicher 8 ("Common Rail") über eine Hochdruckleitung 7 an die Hochdruckpumpe 2 angeschlossen. Ein Mengensteuerventil 10 mit einer elektromagnetischen Betätigungseinrichtung - im Folgenden als Aktuator 11 bezeichnet - ist hydraulisch zwischen der Niederdruckleitung 5 und der Hochdruckpumpe 2 angeordnet und bildet das Einlassventil der Hochdruckpumpe 2. Sonstige Elemente, wie beispielsweise das Auslassventil der Hochdruckpumpe 2, sind in der Figur 1 nicht gezeichnet. Es versteht sich, dass das Mengensteuerventil 10 in die Hochdruckpumpe 2 integriert sein kann.

Beim Betrieb des Kraftstoffsystems 1 fördert die Vorförderpumpe 4 Kraftstoff vom Kraftstofftank 6 in die Niederdruckleitung 5.

Die Hochdruckpumpe 2 saugt Kraftstoff aus der Niederdruckleitung 5 an und fördert ihn in die Hochdruckleitung 7 und den Hochdruckspeicher 8.

Die Hochdruckpumpe 2 hat, weil es sich um eine Kolbenpumpe handelt, einen Saughub und einen Förderhub. Die Fördermenge der Hochdruckpumpe 2 wird durch das Mengensteuerventil 10 gesteuert, zum Beispiel indem es während eines Förderhubs der Hochdruckpumpe 2 mehr oder weniger lang offen bleibt.

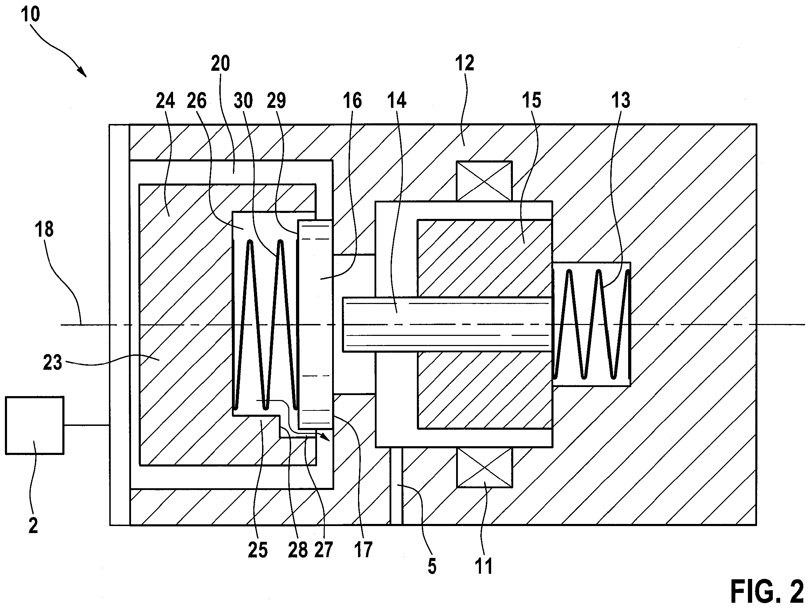

Figur 2 zeigt einen Teillängsschnitt des Mengensteuerventils 10. Das Mengensteuerventil 10 umfasst ein Gehäuse 12, eine von einer Magnetventilfeder 13 beaufschlagten Ventilnadel 14 mit einem daran angeordneten Magnetanker 15, ein plattenförmiges Ventilelement 16 und einen mit diesem zusammenarbeitenden gehäusefesten Ventilsitz 17 ("Ruhesitz"). Die Elemente des Mengensteuerventils 10 sind im Wesentlichen rotationssymmetrisch bezüglich einer Mittellinie 18. Die Ventilnadel 14 und der Magnetanker 15 bilden eine Nadel-Anker-Einheit.

In der Figur 1 ist die Hochdruckpumpe 2 rechts von dem Mengensteuerventil 10 und die von der Vorförderpumpe 4 kommende Niederdruckleitung 5 links von dem Mengensteuerventil 10 angeordnet.

Während eines Saughubs der Hochdruckpumpe 2 hebt das Ventilelement 16 von dem Ventilsitz 17 ab (nicht dargestellt in Figur 2), so dass Kraftstoff aus der Niederdruckleitung 5 durch den dann vorhandenen Spalt zwischen dem Ventilelement 16 und dem Ventilsitz 17 und einen ringförmigen Strömungskanal 20 in Richtung Hochdruckpumpe 2 strömen kann.

Der ringförmige Strömungskanal 20 wird außen von dem Gehäuse 12 und innen von einem Innenteil 23 begrenzt. Das Innenteil 23 kann ein Teil des Gehäuses 12 sein oder ein separates Bauteil sein, das mit dem Gehäuse 12 verbunden ist.

Das Innenteil 23 ist topfförmig gestaltet mit einem "Boden" 24 und einer im Wesentlichen zylindrischen "Wand" 25. Das Innenteil 23 weist auf seiner dem Ventilglied 16 zugewandten Stirnseite einen Dämpfungsraum 26 auf. In dem Dämpfungsraum 26 ist eine Feder 30, die das Ventilelement 16 gegen den Ventilsitz 17 presst.

Das Innenteil 23 kann aus Kunststoff oder Metall, zum Beispiel als Blechumformteil, hergestellt werden.

Das plattenförmige Ventilelement 16 ragt zumindest teilweise in das Innenteil 23 und begrenzt auf diese Weise den Dämpfungsraum 26.

Der Dämpfungsraum 26 ist mit Kraftstoff gefüllt und mit dem Strömungskanal 20 über eine als Drossel wirkende Engstelle 27 verbunden.

In der Wand 25 des Innenteils 23 beziehungsweise des Dämpfungsraums 26 ist ein erster Vorsprung 28 ausgebildet, der in einer Offenstellung des Ventilelements 16 einen Anschlag für eine einem Ventilsitz 17 abgewandte Fläche 29 des Ventilelements 16 bildet. Der erste Vorsprung 28 muss dabei nicht radial umlaufend gestaltet sein. Es ist für die Abstützung des Ventilelements 16 ausreichend, wenn der erste Vorsprung 28 zwei oder mehr über den Umfang verteilte Segmente umfasst, die in dem ringförmigen Abschirmabschnitt 25 angeordnet sind. Im unteren Teil der Figur 2 ist ein solches Segment mit dem Bezugszeichen 28 dargestellt, während im oberen Teil der Figur 2 kein solches Segment vorhanden ist.

Die Darstellung der Figur 2 zeigt das Mengensteuerventil 10 in Schließstellung. In der Schließstellung liegt das Ventilelement 16 auf dem Ventilsitz 17 des Gehäuses 12 auf. In einer Offenstellung stützt sich das Ventilelement 16 gegen den ersten Vorsprung 28 des ringförmigen Abschirmabschnitts 25 ab.

Das Mengensteuerventil 10 arbeitet folgendermaßen:

Wird der Aktuator 11 stromlos geschaltet, bewegt die Federkraft der Magnetventilfeder 13 die Ventilnadel 14 und den damit fest verbundenen Magnetanker 15 in der Zeichnung nach links. Dabei trifft die Ventilnadel 14 auf das Ventilelement 16 und bewegt dieses ebenfalls nach links. Dadurch wird der Kraftstoff im Fluidbehälter 26 unter Druck gesetzt und muss durch die Engstelle 27 in den Strömungskanal 20 entweichen. Dies ist in Figur 2 durch einen Pfeil (ohne Bezugszeichen) angedeutet. Die Engstelle 27 wirkt dabei als Drossel, so dass der Kraftstoff nur langsam entweichen kann. Die daraus resultierende hydraulische Kraft wirkt dämpfend entgegen der Federkraft der Magnetventilfeder 13, so dass die Geschwindigkeit mit der das Ventilelement 16 am ersten Vorsprung 28 anschlägt reduziert wird.

Wenn der Aktuator 11 bestromt wird, bewegt sich die Ventilnadel 14 in der Zeichnung nach links, so dass sich das Ventilglied 16 in Richtung des Ventilsitzes 17 bewegen kann, wie ein herkömmliches Einlassventil.

Alternativ kann das Mengensteuerventil 10 auch stromlos geschlossen sein.

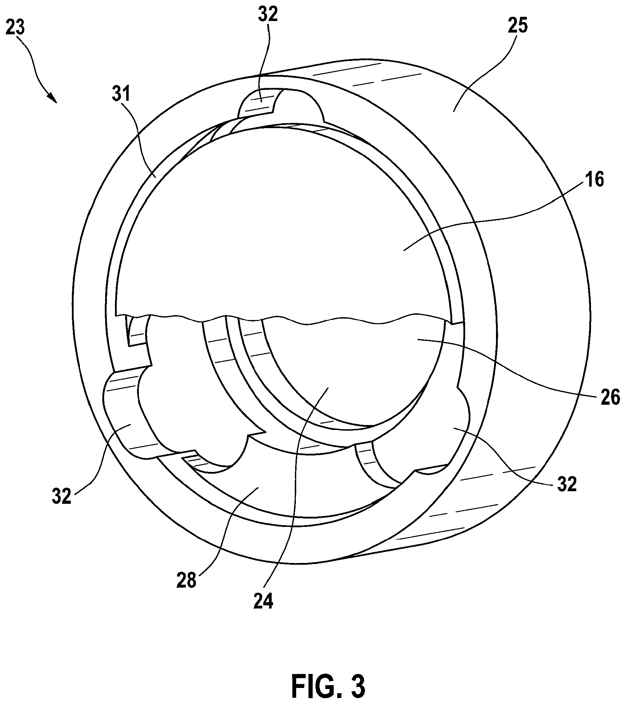

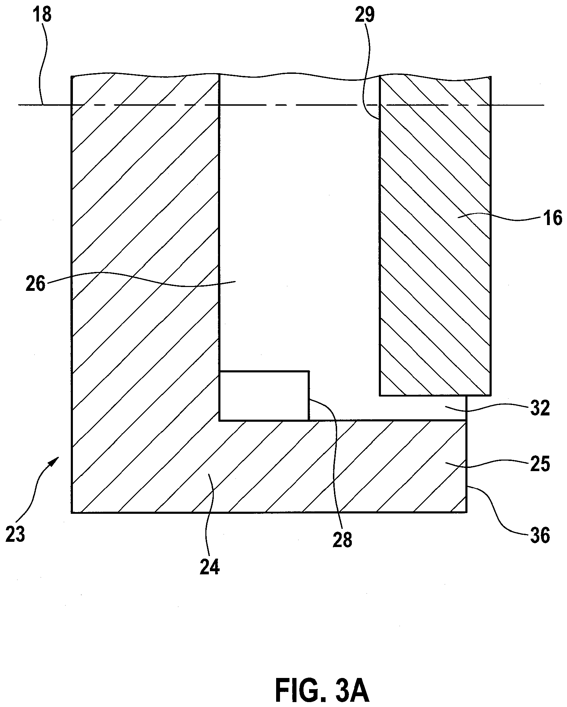

Figur 3 zeigt eine isometrische Darstellung des Innenteils 23 vom Ventilelement 16 aus gesehen. Zur Verdeutlichung ist das Ventilelement 16 geschnitten dargestellt. Die Engstelle besteht im Wesentlichen aus mehreren über den Umfang des Spalts 31 verteilten Ausbuchtungen 32. Alternativ können die Ausbuchtungen 32 auch in dem Ventilglied 16 ausgebildet sein.
Die ringförmige Fläche des Spaltes 31 und die Querschnittsflächen der Ausbuchtung 32 senkrecht zur Mittellinie 18 des Mengensteuerventils 10 bilden insgesamt den wirksamen Strömungsquerschnitt der Engstelle 27. Dabei sind die Ausbuchtungen 32 maßgeblich für das Dämpfungsverhalten der Engstelle 27, weil ein Großteil des aus dem Dämpfungsraum 26 verdrängten oder in den Dämpfungsraum 26 zurückströmenden Kraftstoffs durch die Ausbuchtungen 32 strömt.

Dies bedeutet auch, dass fertigungsbedingte Maßabweichungen der Durchmesser von Ventilelement 16 oder Wand 25 nur einen sehr geringen Einfluss auf das Dämpfungsverhalten des Dämpfungsraums 26 haben. Dadurch wird die Streuung innerhalb verschiedener Exemplare von in Serie gefertigten Mengensteuerventilen 10 stark reduziert, was erhebliche Vorteile beim Betrieb der Brennkraftmaschine mit sich bringt.

In dem in den Figuren 2 und 3 dargestellten ersten Ausführungsbeispiel reicht die Ausdehnung der Ausbuchtung 32 längs der Mittellinie 18 tiefer als der als Anschlag für das Ventilelement 16 dienende Vorsprung 28 in den Dämpfungsraum 26; er erreicht aber nicht den Boden 24 des Innenteils 23. In Figur 3A ist eine Variante dargestellt bei der die Ausbuchtung 32 bis zum Boden 24 reicht.

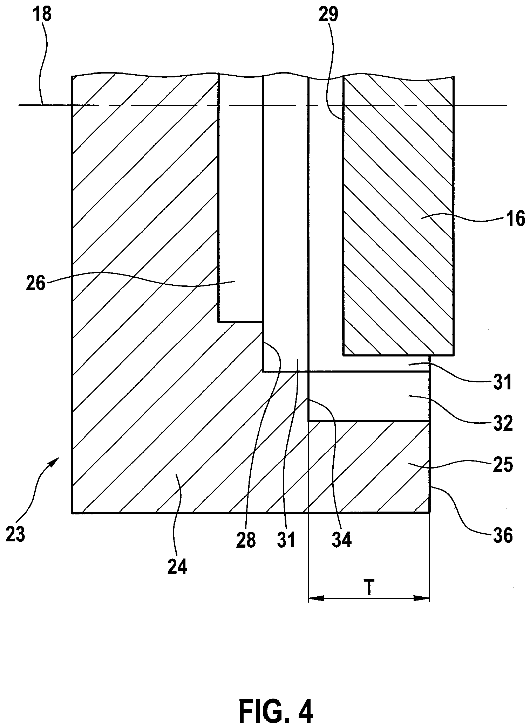

In Figur 4 ist eine Variante dargestellt bei der die Ausbuchtung 32 vor dem ersten Vorsprung 28 endet. In dem Ausführungsbeispiel gemäß Figur 4 wird eine Tiefe T der Ausbuchtung 32 von einem zweiten Vorsprung 34 begrenzt. Dadurch wird erreicht, dass das Ventilelement 16 den wirksamen Strömungsquerschnitt der Ausbuchtung 32 überdeckt bevor es am ersten Vorsprung 28 anschlägt. Auf diese Weise steht zu Beginn der Öffnungsbewegung des Ventilelements 16 ein großer Gesamt-Strömungsquerschnitt zur Verfügung, der sich aus dem Strömungsquerschnitt des Spalts 31 und den Strömungsquerschnitten der Ausbuchtungen 32 zusammensetzt. Dadurch kann der Kraftstoff schnell aus dem Dämpfungsraum 26 entweichen und das Ventilelement 16 bewegt sich schnell in Richtung des ersten Vorsprungs 28.

Sobald sich das Ventilelement 16 so weit in Richtung des ersten Absatzes 28 bewegt hat, dass es mit seiner dem Ruhesitz 17 abgewandten (Stirn-)Fläche 29 die Ausbuchtungen 32 verdeckt, ist nur noch der Strömungsquerschnitt des Spalts 31 wirksam, so dass die Dämpfungswirkung erhöht und das Ventilglied 16 noch weiter verzögert wird, bevor es auf dem ersten Absatz 28 auftrifft. Infolgedessen bewegt sich auch das Ventilelement 16 langsamer in Richtung des ersten Vorsprungs 28. Dadurch wird der Impuls des Ventilelements 16 beim Auftreffen auf dem ersten Vorsprung 28 weiter reduziert. In Folge dessen ist auch das dabei entstehende Geräusch leiser. Es wird somit eine variable Dämpfung erzielt, die von der Stellung des Ventilglieds 16 abhängt. Dabei hat die daraus resultierende Dämpfungskennlinie eine Stufe.

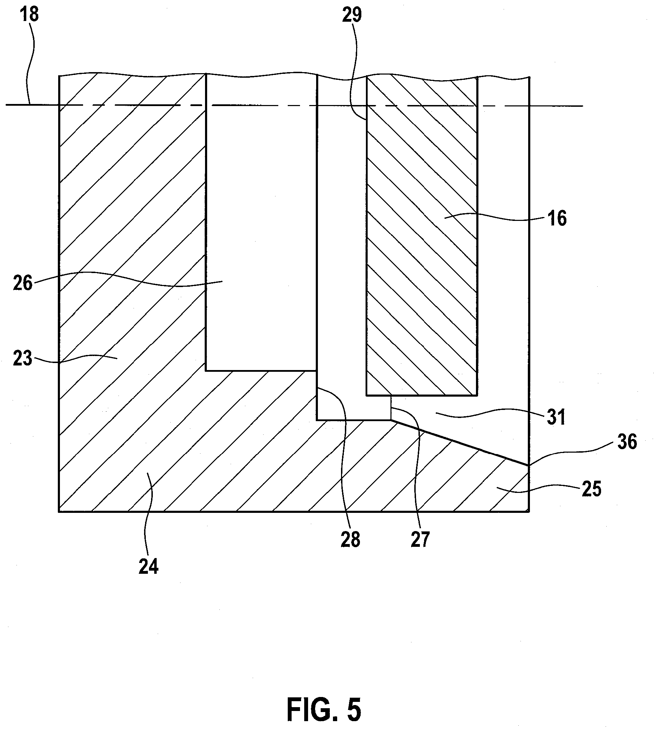

Figur 5 zeigt eine der Figur 4 ähnliche Ausführungsform der Erfindung, wobei sich die Ausbuchtung 32 von einer Kante 36 der Wand 25 zur Engstelle 27 hin verjüngt. Dadurch erhält der Spalt 31 in einem ersten Abschnitt, der sich von einer Kante 36 des Innenteils 23 bis zur Engstelle 27 erstreckt, die Form eines Kegelstumpfes. Die Kante 36 markiert den Anfang des Spalts 31. Ein daran anschließender zweiter Abschnitt, der sich von der Engstelle 27 bis zum ersten Vorsprung 28 erstreckt, ist zylindrisch ausgeführt.

Die grundsätzliche Funktion der in der Figur 5 dargestellten Ausführungsform ist zu der in Figur 4 vergleichbar. Jedoch nimmt aufgrund der stetigen Abnahme des wirksamen Strömungsquerschnittes in der Engstelle 27 die Geschwindigkeit mit der sich das Ventilelement 16 in seine Offenstellung, das heißt in Richtung des ersten Vorsprungs 28, bewegt, ebenfalls stetig ab. Das Ventilelement 16 wird folglich gleichförmig verzögert.

Bei allen anhand der Figuren 2 bis 5 dargestellten Ausführungsformen sind die Ausbuchtungen 32 in der Wand 25 des Innenteils 23 ausgebildet. Selbstverständlich werden die erfindungsgemäßen Vorteile auch dann erreicht, wenn die Ausbuchtungen 32 in dem Ventilglied 16 vorhanden sind. Auch eine Kombination von Ausbuchtungen 32 in der Wand 25 und in dem Ventilglied 16 ist möglich.

## Patentansprüche

1. Mengensteuerventil (10) mit einer axial bewegbaren Ventilnadel (14) und einem von der Ventilnadel (14) in einer Öffnungsrichtung beaufschlagbaren Ventilelement (16), wobei das Ventilelement (16) einen topfförmigen Dämpfungsraum (26) begrenzt, wobei zwischen einer Wand (25) des Dämpfungsraums (26) und dem Ventilelement (16) ein Spalt (31) ausgebildet ist, der den Dämpfungsraum (26) mit einem Strömungskanal (20) verbindet, **dadurch gekennzeichnet, dass** der Spalt (31) mindestens eine Ausbuchtung (32) aufweist und dass das Ventilelement (16) plattenförmig ist.

2. Mengensteuerventil (10) nach Anspruch 1, **dadurch gekennzeichnet, dass** der Spalt (31) in einer orthogonal zu der Bewegungsrichtung der Ventilnadel (14) erstreckenden Ebene einen Umfang hat, und dass die mindestens eine Ausbuchtung (32) sich über weniger als 50%, bevorzugt weniger als 30% des Umfangs erstreckt.

3. Mengensteuerventil (10) nach einem der vorangehenden Ansprüche, **dadurch gekennzeichnet, dass** der Strömungsquerschnitt des Spalts (31) von der Stellung des Ventilelements (16) relativ zu dem Dämpfungsraum (26) abhängt.

4. Mengensteuerventil (10) nach Anspruch 3, **dadurch gekennzeichnet, dass** eine Tiefe (T) der mindestens einen Ausbuchtung (32) kleiner ist als eine Tiefe des Spalts (31).

5. Mengensteuerventil (10) nach Anspruch 3, **dadurch gekennzeichnet, dass** die Tiefe (T) der mindestens einen Ausbuchtung (32) größer ist als die Tiefe des Spalts (31).

6. Mengensteuerventil (10) nach einem der Ansprüche 3 bis 5, **dadurch gekennzeichnet, dass** sich die mindestens eine Ausbuchtung (32) von einer Kante (36) der Wand (25) zum Boden (24) des Dämpfungsraums (26) hin verjüngt.

7. Mengensteuerventil (10) nach einem der vorangehenden Ansprüche, **dadurch gekennzeichnet, dass** in dem Dämpfungsraum (26) ein erster Vorsprung (28) ausgebildet ist, der als Endanschlag des Ventilelements (16) dient.

8. Mengensteuerventil (10) nach Anspruch 7, **dadurch gekennzeichnet, dass** der erste Vorsprung (28) zwei oder mehr über den Umfang verteilte Segmente umfasst.

9. Mengensteuerventil (10) nach einem der vorangehenden Ansprüche, **dadurch gekennzeichnet, dass** der Dämpfungsraum (26) in dem Gehäuse (12) oder in einem Innenteil (23) ausgebildet ist, und dass das Innenteil (23) einstückig mit dem Gehäuse (12) des Mengensteuerventils (10) ausgebildet oder fest mit dem Gehäuse (12) verbunden ist.

10. Hochdruckpumpe (2) mit einem Pumpenelement und einem Einlassventil, **dadurch gekennzeichnet, dass** das Einlassventil ein Mengensteuerventil (10) nach einem der vorhergehenden Ansprüche ist.

11. Hochdruckpumpe (2) nach Anspruch 10, **dadurch gekennzeichnet, dass** der Strömungskanal (20) einen Pumpenraum der Hochdruckpumpe (2) mit einer Niederdruckleitung (5) hydraulisch verbindet.

## Claims

1. Quantity control valve (10) having an axially movable valve needle (14) and a valve element (16) that can be acted upon by the valve.needle (14) in an opening direction, wherein the valve element (16) delimits a pot-shaped damping chamber (26), wherein a gap (31) is formed between a wall (25) of the damping chamber (26) and the valve element (16), connecting the damping chamber (26) to a flow duct (20), **characterized in that** the gap (31) has at least one recess (32) and **in that** the valve element (16) is plate-shaped.

2. Quantity control valve (10) according to Claim 1, **characterized in that** the gap (31) has a periphery in a plane extending orthogonally to the direction of motion of the valve needle (14), and **in that** the at least one recess (32) extends over less than 50%, preferably less than 30% of the periphery.

3. Quantity control valve (10) according to one of the preceding claims, **characterized in that** the flow cross section of the gap (31) depends on the position of the valve element (16) relative to the damping chamber (26).

4. Quantity control valve (10) according to Claim 3, **characterized in that** a depth (T) of the at least one recess (32) is less than a depth of the gap (31).

5. Quantity control valve (10) according to Claim 3, **characterized in that** the depth (T) of the at least one recess (32) is greater than the depth of the gap (31).

6. Quantity control valve (10) according to one of Claims 3 to 5, **characterized in that** the at least one recess (32) tapers from one edge (36) of the wall (25) toward the bottom (24) of the damping chamber (26).

7. Quantity control valve (10) according to one of the preceding claims, **characterized in that** a first projection (28), which serves as an end stop of the valve element (16), is formed in the damping chamber (26).

8. Quantity control valve (10) according to Claim 7, **characterized in that** the first projection (28) comprises two or more segments distributed over the periphery.

9. Quantity control valve (10) according to one of the preceding claims, **characterized in that** the damping chamber (26) is formed in the housing (12) or in an inner part (23), and **in that** the inner part (23) is formed integrally with the housing (12) of the quantity control valve or is connected securely to the housing (12).

10. High-pressure pump (2) having a pump element and an inlet valve, **characterized in that** the inlet valve is a quantity control valve (10) according to one of the preceding claims.

11. High-pressure pump (2) according to Claim 10, **characterized in that** the flow duct (20) hydraulically connects a pump chamber of the high-pressure pump (2) to a low-pressure line (5).

## Revendications

1. Soupape de commande de quantité (10) avec un pointeau mobile axialement (14) et un élément de soupape (16) pouvant être sollicité par le pointeau (14) dans une direction d'ouverture, dans laquelle l'élément de soupape (16) limite une chambre d'amortissement (26) en forme de godet, dans laquelle une fente (31) est formée entre une paroi (25) de la chambre d'amortissement (26) et l'élément de soupape (16), et relie la chambre d'amortissement (26) à un canal d'écoulement (20), **caractérisée en ce que** la fente (31) présente au moins un creux (32) et **en ce que** l'élément de soupape (16) est en forme de plaque.

2. Soupape de commande de quantité (10) selon la revendication 1, **caractérisée en ce que** la fente (31) présente un pourtour dans un plan s'étendant orthogonalement à la direction de déplacement du pointeau (14), et **en ce que** ledit au moins un creux (32) s'étend sur moins de 50 %, de préférence sur moins de 30 % du pourtour.

3. Soupape de commande de quantité (10) selon l'une quelconque des revendications précédentes, **caractérisée en ce que** la section transversale d'écoulement de la fente (31) dépend de la position de l'élément de soupape (16) par rapport à la chambre d'amortissement (26).

4. Soupape de commande de quantité (10) selon la revendication 3, **caractérisée en ce que** la profondeur (T) dudit au moins un creux (32) est plus petite qu'une profondeur de la fente (31).

5. Soupape de commande de quantité (10) selon la revendication 3, **caractérisée en ce que** la profondeur (T) dudit au moins un creux (32) est plus grande que la profondeur de la fente (31).

6. Soupape de commande de quantité (10) selon l'une quelconque des revendications 3 à 5, **caractérisée en ce que** ledit au moins un creux (32) se rétrécit depuis une arête (36) de la paroi (25) en direction du fond (24) de la chambre d'amortissement (26).

7. Soupape de commande de quantité (10) selon l'une quelconque des revendications précédentes, **caractérisée en ce qu'**une première saillie (28) est formée dans la chambre d'amortissement (26), et fait office de butée d'extrémité de l'élément de soupape (16).

8. Soupape de commande de quantité (10) selon la revendication 7, **caractérisée en ce que** la première saillie (28) comprend deux segments, ou plus, répartis sur le pourtour.

9. Soupape de commande de quantité (10) selon l'une quelconque des revendications précédentes, **caractérisée en ce que** la chambre d'amortissement (26) est formée dans le corps (12) ou dans une partie intérieure (23), et **en ce que** la partie intérieure (23) est formée d'une seule pièce avec le corps (12) de la soupape de commande de quantité (10) ou est fixée sur le corps (12).

10. Pompe à haute pression (2) pourvue d'un élément de pompe et d'une soupape d'entrée, **caractérisée en ce que** la soupape d'entrée est une soupape de commande de quantité (10) selon l'une quelconque des revendications précédentes.

11. Pompe à haute pression (2) selon la revendication 10, **caractérisée en ce que** le canal d'écoulement (20) relie hydrauliquement une chambre de pompe de la pompe à haute pression (2) à une conduite à basse pression (5).
